# EUROPEAN PATENT APPLICATION

(11) **EP 4 642 097 A1**
(43) Date of publication of application: **29.10.2025**
(21) Application number: 22968817.1
(22) Date of filing: 19.12.2022
(51) Int. Cl.: H04W 36/04

(54) **BLOCK ACK (BA) MESSAGE TRANSMISSION METHOD, ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/140147
(87) International publication number: WO 2024/130513

(57) **Abstract**

The embodiments of the present disclosure relate to the technical field of mobile communications. Provided are a block ACK (BA) message transmission method, an electronic device and a storage medium. The BA message transmission method is applied to a first access point device AP. The method comprises: determining a first BA message frame, wherein the first BA message frame comprises first serial number (SN) information of a first data frame transmitted by a station device STA, the first SN information comprises a first SN initial value, and the first SN initial value is smaller than an SN value corresponding to a first frame at which a first AP receives the first data frame; and transmitting the first BA message frame. The embodiments of the present disclosure provide a BA mechanism implementation method to meet a transmission requirement of **UHR.**

## Description

### FIELD

Embodiments of the present invention relate to the field of mobile communication technology, and more particularly to a transmission method for a block acknowledgment BA message, an electronic device, and a storage medium.

### BACKGROUND

With the rapid development of mobile communication technology, Wireless Fidelity (Wi-Fi) technology has made great progress in transmission rate and throughput. At present, research into the Wi-Fi technology involves the aspect of such as Ultra High Reliability (UHR), with the goal of improving the reliability of Wireless Local Area Networks (WLAN) connectivity, reducing latency, improving manageability, increasing throughput at different signal to noise ratio (SNR) levels, and reducing device-level power consumption. In addition, in UHR, in order to improve the throughput of the system, simultaneous communications in frequency bands of sub-7 GHz (gigahertz) as well as 45 GHz and/or 60 GHz are proposed.

In UHR, a block Ack (BA) mechanism needs to be supported. Therefore, an implementation method of the BA mechanism needs to be provided to meet the transmission requirements of UHR.

### SUMMARY

Embodiments of the present invention provide a transmission method for a block acknowledgment BA message, an electronic device, and a storage medium to provide an implementation method of the BA mechanism to meet the transmission requirements of UHR.

In an aspect, embodiments of the present invention provide a transmission method for a block acknowledgment BA message, which is performed by a first access point AP, and includes: determining a first BA message frame; where the first BA message frame includes first sequence number SN information of a first data frame sent by a station STA; the first SN information includes a first SN starting value, and the first SN starting value is smaller than an SN value corresponding to a first frame of the first data frame received by the first AP; and sending the first BA message frame.

In another aspect, embodiments of the present invention provide a transmission method for a block acknowledgment BA message, which is performed by a station STA, and includes: receiving a first BA message frame sent by a first access point AP; where the first BA message frame includes first sequence number SN information of a first data frame sent by the STA; the first SN information includes a first SN starting value, and the first SN starting value is smaller than an SN value corresponding to a first frame of the first data frame received by the first AP.

In another aspect, embodiments of the present invention also provide an electronic device, which is a first access point AP and includes: a determining module configured to determine a first BA message frame; where the first BA message frame includes first sequence number SN information of a first data frame sent by a station STA; the first SN information includes a first SN starting value, and the first SN starting value is smaller than an SN value corresponding to a first frame of the first data frame received by the first AP; and a sending module configured to send the first BA message frame.

In another aspect, embodiments of the present invention also provide an electronic device, which is a station STA and includes: a receiving module configured to receive a first BA message frame sent by a first access point AP; where the first BA message frame includes first sequence number SN information of a first data frame sent by the STA; the first SN information includes a first SN starting value, and the first SN starting value is smaller than an SN value corresponding to a first frame of the first data frame received by the first AP.

Embodiments of the present invention also provide an electronic device, which includes: a memory, a processor, and computer programs stored in the memory and executable on the processor, when the processor executes the programs, the method according to one or more of embodiments of the present invention is implemented.

Embodiments of the present invention also provide a computer-readable storage medium having stored therein computer programs that, when executed by a processor, cause the method according to one or more of embodiments of the present invention to be implemented.

In embodiments of the present invention, the first AP determines the first BA message frame; the first BA message frame includes the first sequence number SN information of the first data frame sent by the station STA; the first SN information includes the first SN starting value, and the first SN starting value is smaller than the SN value corresponding to the first frame of the first data frame received by the first AP; and the first AP sends the first BA message frame, so as to implement the BA mechanism, while meeting the requirements of UHR and low-latency services.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

In order to more clearly illustrate the technical solutions of embodiments of the present invention, drawings to be used in the description of the embodiments of the present invention will be briefly introduced below. Apparently, the drawings in the following description are only some embodiments of the present invention, and other drawings can be obtained by those ordinarily skilled in the art based on these drawings without creative labor.
FIG. 1 is a first schematic flowchart of a transmission method for a block acknowledgment BA message according to embodiments of the present invention;
FIG. 2 is a first schematic diagram of a first example according to embodiments of the present invention;
FIG. 3 is a second schematic diagram of a first example according to embodiments of the present invention;
FIG. 4 is a second schematic flowchart of a transmission method for a block acknowledgment BA message according to embodiments of the present invention;
FIG. 5 is a first schematic block diagram of an electronic device according to embodiments of the present invention;
FIG. 6 is a second schematic block diagram of an electronic device according to embodiments of the present invention; and
FIG. 7 is a third schematic block diagram of an electronic device according to embodiments of the present invention.

### DETAILED DESCRIPTION

Reference will now be made in detail to illustrative embodiments of the present invention, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with embodiments of the present invention. Instead, they are merely examples of devices and methods consistent with some aspects of the present invention as recited in the appended claims.

Terms used in embodiments of the present invention are for the purpose of describing specific embodiments, but should not be construed to limit the present invention. As used in the present invention and the appended claims, "a/an", "said" and "the" in singular forms are intended to include plural forms, unless clearly indicated in the context otherwise. It should also be understood that the term "and/or" used herein represents and contains any one or any possible combinations of one or more associated items listed. For example, the expression "A and/or B" may represent the following three cases: Aalone, B alone, and both A and B. The character "/" generally indicates an "or" relationship of the associated objects. The term "a plurality of" refers to two or more. In view of this, in embodiments of the present invention, the term "a plurality of" may be understood as "at least two".

It should be understood that, although terms such as "first," "second" and "third" may be used in the present invention for describing various information, these information should not be limited by these terms. These terms are used for distinguishing information of the same type from each other. For example, first information may also be referred to as second information, and similarly, the second information may also be referred to as the first information, without departing from the scope of the present invention. Depending on the context, the term "if" as used herein may be construed to mean "when" or "upon" or "in response to determining".

The technical solutions in the embodiments of the present invention will be clearly and completely described below with reference to the drawings of embodiments of the present invention. Apparently, the described embodiments are only part, instead all, of the embodiments of the present invention. Based on the embodiments in the present invention, all other embodiments obtained by those of ordinary skill in the art without creative work are within the protection scope of the present invention.

Embodiments of the present invention provide a transmission method for a block acknowledgment BA message, an electronic device, and a storage medium to provide an implementation method of the BA mechanism to meet the transmission requirements of UHR.

The method and device are based on the same concept. Since the method and device solve the problem in a similar principle, the implementation of the device and the method can refer to each other, and the repeated parts will not be elaborated.

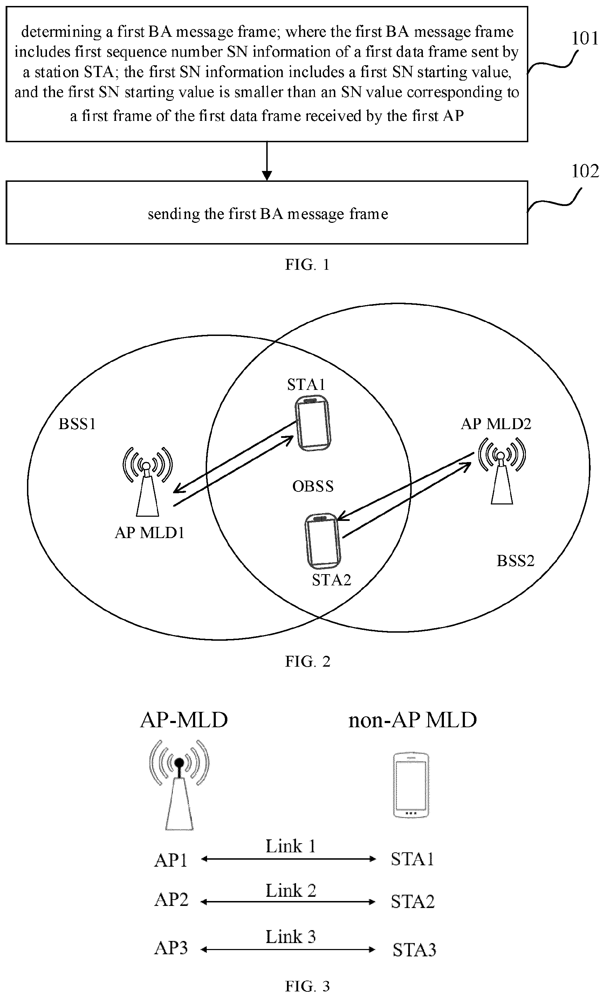

As shown in FIG. 1, embodiments of the present invention provide a transmission method for a block acknowledgment BA message. Optionally, the method may be performed by a first AP (access point). Optionally, in embodiments of the present invention, a STA is an electronic device with a wireless network access function, providing a frame delivery service to enable information to be transmitted; and an access point (AP) device is a device with for example a wireless to wired bridging function, and the AP is responsible for extending a service provided by the wired network to the wireless network.

The method may include the following steps.

In step 101, a first BA message frame is determined; the first BA message frame includes first sequence number SN information of a first data frame sent by a station STA; the first SN information includes a first SN starting value, and the first SN starting value is smaller than an SN value corresponding to a first frame of the first data frame received by the first AP.

In a wireless local area network, a basic service set (BSS) may be composed of an AP and one or more stations (STAs) communicating with the AP. A basic service set may be connected to a distribution system (DS) through its AP to access another basic service set to form an extended service set (ESS). As a first example, referring to FIG. 2, AP1 and STA1 form BSS1, and AP2 and STA2 form BSS2; if the coverage ranges of two or more BSSs overlap, an overlapping basic service set (OBSS) is formed. As shown in FIG. 2, BSS1 and BSS2 overlap to form an OBSS.

Optionally, in embodiments of the present invention, AP and STA may be devices supporting multiple links, and may be represented as for example AP MLD (multi-link device) and non-AP MLD, respectively; AP MLD may represent an access point supporting a multiple-link communication function, and non-AP MLD may represent an STA supporting a multiple-link communication function.

Referring to FIG. 3, AP MLD may include three affiliated APs, such as AP1, AP2 and AP3 as shown in FIG. 3; and these APs may work on Link 1, Link 2, and Link 3, respectively. Non-AP MLD may also include three affiliated STAs, such as STA1, STA2, and STA3 as shown in FIG. 2; and STA1 works on Link 1, STA2 works on Link 2, and STA3 works on Link 3.

For ease of description, in the following, the description is made mainly with reference to an example in which an AP communicates with a STA under multiple links, however, example embodiments of the present invention are not limited thereto. In the example as shown in FIG. 3, it is assumed that AP1 communicates with STA1 through the corresponding first link, i.e., Link 1, similarly, AP2 communicates with STA2 through the corresponding second link, i.e., Link 2, and the AP communicates with STA3 through the third link, i.e., Link 3. In addition, Link 1 to Link 3 may be multiple links at different frequencies, for example, links at 2.4 GHz, 5 GHz, and 6 GHz, or several links of the same or different bandwidths at 2.4 GHz. In addition, multiple channels may exist under each link. It is understandable that the communication scenario shown in FIG. 2 is used as an example, and the concept of the present invention is not limited thereto. For example, an AP MLD may be connected to multiple (e.g., three) non-AP MLDs, or under each link, an AP may communicate with multiple other types of stations.

In the multi-link scenario, in order to establish a block acknowledgment mechanism (or BA agreement) between two MLDs, a BA initiator may send an add BA request frame to a BA receiver through an associated STA on an enabled link, and the add BA request frame indicates a TID for which the BA agreement is established. After receiving the add BA request frame, the BA receiver may respond to the add BA request frame through the affiliated STA on the enabled link, and the BA receiver may accept or reject the request. If the BA receiver accepts the request, a BA agreement (including setting and modification of BA parameters) is established between the BA initiator and the BA receiver for the TID specified in the add BA request frame.

After establishing the BA agreement, the BA initiator or the BA receiver may send a BA request frame to request the other party to feed back a BA message frame. In embodiments of the present invention, after a first AP receives a BA request frame sent by an STA, it determines a first BA message frame; the first BA message frame includes first sequence number (SN) information of a first data frame sent by a station STA; the first SN information includes a first SN starting value, the first SN starting value is configured to indicate a starting position of data frames sent by the STA, and the BA message frame is configured to feed back whether a data frame corresponding to the SN is correctly received. It should be noted that in embodiments of the present invention, the first data frame refers to a data frame sent by the STA, i.e., an uplink data frame, which may be a data frame sent by the STA to the first AP or other APs.

The first SN starting value is smaller than an SN value corresponding to a first frame of the first data frame received by the first AP; that is, the first frame of the first data frame received by the first AP is later than a first frame of the first data frame sent by the STA. For example, when a communication state between the STA and its associated AP changes, the STA may switch the communication to another AP, so that data transmission is uninterrupted. For example, in the scenario of switching from a second AP to the first AP, a first frame of the first data frame received by the second AP is the first frame of the first data frame sent by the STA, and its starting SN is N. After transmitting M frames of first data frames, the STA switches the communication from the second AP to the first AP, at this time, the first SN starting value of the first frame of the first data frame received by the first AP is N+M. Therefore, the first SN starting value (N) is smaller than the SN value (N+M) corresponding to the first frame of the first data frame received by the first AP.

In step 102, the first BA message frame is sent.

In a case where the first AP determines that all the first data frames are correctly received, it feeds back the first BA message frame to the STA; for example, in a case where the first AP determines that all the first data frames are correctly received according to state information of first data frames received by other APs (such as the number of received data frames, the corresponding SN, etc., which may be sent by other APs or the STA to the first AP), the total number of the first data frames determined when the STA establishes the BA agreement (which may be sent by other APs or the STA to the first AP), and state information of the first data frames received by the first AP (such as the number of received data frames, the corresponding SN, etc.), the first AP may feed back the first BA message frame to the STA.

In this way, in order to meet the requirement of the UHR for transmission rate and the requirement of the low-latency service for latency, when the state of the communication between the STA and its associated AP changes, the STAmay switch the communication to another AP, so that data transmission is uninterrupted; and after the transmission of data frames is completed, BA feedback may be implemented.

It may be understood that in embodiments of the present invention, if the first AP determines that not all the first data frames are received correctly, it will not feed back the first BA message frame to the STA. The STA may determine, according to the reception state of the first data frames fed back by all Aps, a first data frame that is not successfully received, and retransmit the data frame that is not successfully received, and then send the BA request frame.

In embodiments of the present invention, the first AP determines the first BA message frame; the first BA message frame includes the first sequence number SN information of the first data frame sent by the station STA; the first SN information includes the first SN starting value, and the first SN starting value is smaller than the SN value corresponding to the first frame of the first data frame received by the first AP; and the first AP sends the first BA message frame, to implement the BA mechanism, while meeting the requirements of UHR and the low-latency service.

Embodiments of the present invention provide a transmission method for a BA message, which is performed by a first AP, and includes:
receiving a first BA request frame sent by the STA; where the first BA request frame includes first SN information;
determining a first BA message frame; where the first BA message frame includes the first SN information of a first data frame sent by a station STA; the first SN information includes a first SN starting value, and the first SN starting value is smaller than an SN value corresponding to a first frame of the first data frame received by the first AP; and
sending the first BA message frame.

After the BA agreement is established, the STA sends the first BA request frame to request the first AP to feed back the first BA message frame; after receiving the first BA request frame sent by the STA, the first AP determines the first BA message frame; the first BA message frame includes the first SN information of the first data frame sent by the STA; the first SN information includes the first SN starting value, and the first SN starting value is configured to indicate a starting position of the data frame sent by the STA.

Optionally, the first BA request frame further includes: a media access control (MAC) address of the STA or an MLD MAC address of a Non-AP MLD to which the STA is affiliated.

Embodiments of the present invention provide a transmission method for a BA message, which is performed by a first AP, and includes:
receiving first BA establishment information sent by a second AP; where the first BA establishment information includes: a first SN starting value and a total number of the first data frames determined when the second AP establishes a BA agreement with a STA;
receiving a first BA request frame sent by the STA; where the first BA request frame includes first SN information;
determining a first BA message frame; where the first BA message frame includes the first SN information of a first data frame sent by the station STA; the first SN information includes the first SN starting value, and the first SN starting value is smaller than an SN value corresponding to a first frame of the first data frame received by the first AP; and
sending the first BA message frame.

The STA establishes a BA mechanism with the second AP, and negotiates the first BA establishment information with the second AP; the first BA establishment information includes: the first SN starting value and the total number of the first data frames determined when the second AP establishes the BA agreement with the STA; the second AP sends the first BA establishment information to the first AP, so that the first AP may feed back the first BA message frame to the STA in a case where the first AP determines that all the first data frames are correctly received according to the first SN starting value, the total number of the first data frames, and state information of the first data frames received by the first AP (for example, the number of data frames received, the corresponding SN, etc.).

Optionally, the number of the second APs may be one or at least two.

Embodiments of the present invention provide a transmission method for a BA message, which is performed by a first AP, and includes:
receiving first BA establishment information sent by a second AP; where the first BA establishment information includes: a first SN starting value and a total number of the first data frames determined when the second AP establishes a BA agreement with a STA.
receiving a first BA request frame sent by the STA; where the first BA request frame includes first SN information;
determining a first BA message frame; where the first BA message frame includes the first SN information of a first data frame sent by the STA; the first SN information includes the first SN starting value, and the first SN starting value is smaller than an SN value corresponding to a first frame of the first data frame received by the first AP; and
determining, according to a second SN end value, the first BA establishment information, and a first SN end value of a last frame of the first data frame received by the first AP, that reception of the first data frames is completed, and sending the first BA message frame to the STA; where the second SN end value is an SN of a last frame of the first data frame sent by the STA to the second AP.

The first AP may feed back the first BA message frame to the STA in a case where the first AP determines, according to the first SN starting value, the total number of the first data frames and the second SN end value that all the first data frames are correctly received. For example, in an example where there is one second AP, the first SN starting value is 0, the second SN ending value is M, and the SN value corresponding to the first frame of the first data frame received by the first AP is (M-1), then it is determined that the first data frames sent to the second AP are correctly received; the first SN end value is (N-1), and the total number of the first data frames is N, then it is determined that the first data frames sent to the first AP are correctly received, and it is determined that all the first data frames are correctly received.

In an optional embodiment, the second SN end value is sent by the second AP or is included in the first BA request frame; that is, the second SN end value may be shared by the second AP or may be included in the first BA request frame sent by the STA.

Embodiments of the present invention provide a transmission method for a BA message, which is performed by a first AP, and includes: receiving a second BA message frame sent by the STA; the second BA message frame includes second SN information of a second data frame received by the STA; the second SN information includes a second SN starting value, and the second SN starting value is smaller than an SN value corresponding to a first frame of the second data frame sent by the first AP.

After the first AP establishes a BA agreement with the STA, the first AP sends a second BA request frame to request the STA to feed back the second BA message frame, and the second BA message frame is configured to feed back whether the data frames sent by all the APs to the STA during this communication process are correctly received. The second BA message frame includes the second SN information of the second data frame received by the STA. The second data frames, i.e., downlink data frames, may be sent to the STA by the first AP and other APs in collaboration. For example, in a scenario of switching from the second AP to the first AP, a first frame of second data frame sent by the second AP is a first frame of second data frame received by the STA, and its starting SN is N. After transmitting M frames of first data frames, the STA switches the communication from the second AP to the first AP. At this time, the second SN starting value of a first frame of second data frame sent by the first AP is N+M. Therefore, the second SN starting value (N) is smaller than the SN value (N+M) corresponding to the first frame of second data frame sent by the first AP. Specifically, for example, in the following scenario, the second AP and the STA negotiate the total number of the second data frames transmitted continuously, such as 20, after the 12th frame of second data frame is transmitted, the STA switches the communication from the second AP to the first AP, the second AP shares the SNs of the 1st frame and the 12th frame and the total number of the second data frames with the first AP for the first AP to determine whether the second data frames sent by the second AP are all received correctly. The first AP transmits the next 8 frames of second data frames. After the transmission is completed, the STA sends the BA request frame to the first AP, and the first AP feeds back the second BA message frame, and the second BA message frame includes the reception state of 20 consecutive data frames.

It should be noted that, in embodiments of the present invention, the second data frame refers to a data frame received by the STA, i.e., a downlink data frame, which may be a data frame sent by the first AP or other APs to the STA.

Embodiments of the present invention provide a transmission method for a BA message, which is performed by a first AP, and includes: sending a second BA request frame to the STA, the second BA request frame includes a third SN end value of a last frame of the second data frame sent by the first AP to the STA.

The STA sends a second BA message frame; the second BA message frame includes second SN information of the second data frame received by the STA; the second SN information includes a second SN starting value, and the second SN starting value is smaller than the SN value corresponding to the first frame of the second data frame sent by the first AP.

After establishing the BA agreement, the first AP sends the second BA request frame to request the STA to feed back the second BA message frame; after the STA receives the second BA request frame sent by the first AP, the STA sends the second BA message frame to the first AP when it is determined that all the second data frames are received correctly; the second BA message frame includes the second SN information of the second data frame received by the STA; the second SN information includes the second SN starting value, and the second SN starting value is configured to indicate a starting position of the second data frame received by the STA.

Embodiments of the present invention provide a transmission method for a BA message, which is performed by a first AP, and includes: establishing a BA agreement with the STA and determining second BA establishment information of the BA agreement established; the second BA establishment information includes: an SN starting value for data frame transmission with the STA, and a total number of data frames transmitted continuously; and the data frame includes the first data frame or the second data frame.

The second BA request frame is sent to the STA, and the second BA request frame includes a third SN end value of a last frame of the second data frame sent by the first AP to the STA.

The STA sends the second BA message frame sent by the STA; the second BA message frame includes the second SN information of the second data frame received by the STA; the second SN information includes the second SN starting value, and the second SN starting value is smaller than an SN value corresponding to a first frame of the second data frame sent by the first AP.

After the initial association between the first AP and the STA is completed, a BA agreement between the first AP and the STA may be established; an initiator of a BA establishment frame may be the STA or the first AP, that is, when the initiator is the STA, the receiver is the first AP; when the initiator is the first AP, the receiver is the STA.

**In** the process of establishing the BA agreement, the initiator sends an add BA request frame, the add BA request frame may include the SN starting value of the first data frame sent by the STA, the total number of of the first data frame transmitted continuously, and the add BA request frame may also include the TID. The receiver reply with an add BA response frame to indicate that it accepts the initiated add BA request; if the STA and the AP are affiliated to certain MLDs, the BA agreement may be applied to multiple links. After establishing the BA agreement, the first AP sends the second BA request frame to request the STA to feed back the second BA message frame.

Embodiments of the present invention provide a transmission method for a BA message, which is performed by a first AP, and includes:
establishing a BA agreement with the STA and determining BA establishment information of the BA agreement established; the BA establishment information includes: an SN starting value for data frame transmission with the STA, and a total number of data frames transmitted continuously; and the data frame includes the first data frame or the second data frame; and
sending the BA establishment information to the second AP.

The first AP establishes a BA mechanism with the STA and negotiates second BA establishment information with the STA; the second BA establishment information includes: the SN starting value for data frame transmission with the STA, and the total number of data frames transmitted continuously.

In a case where the data frame is an uplink data frame, the data frame includes the first data frame; the first AP sends the second BA establishment information to the second AP, so that the second AP may feed back the BA message frame to the STA in a case where the second AP determines, according to the first SN starting value and the total number of the first data frames, that all the first data frames are correctly transmitted.

In a case where the data frame is a downlink data, the data frame includes the second data frame; the first AP sends the second BA establishment information to the second AP, so that the second AP may request the BA message frame from the STA in a case where the second AP determines, according to the second SN starting value and the total number of the second data frames, that all the second data frames are correctly transmitted.

In embodiments of the present invention, the first AP determines the first BA message frame; the first BA message frame includes the first SN information of the first data frame sent by the STA; the first SN information includes the first SN starting value, and the first SN starting value is smaller than the SN value corresponding to the first frame of the first data frame received by the first AP; and the first AP sends the first BA message frame, to implement the BA mechanism, while meeting the requirements of UHR and the low-latency service.

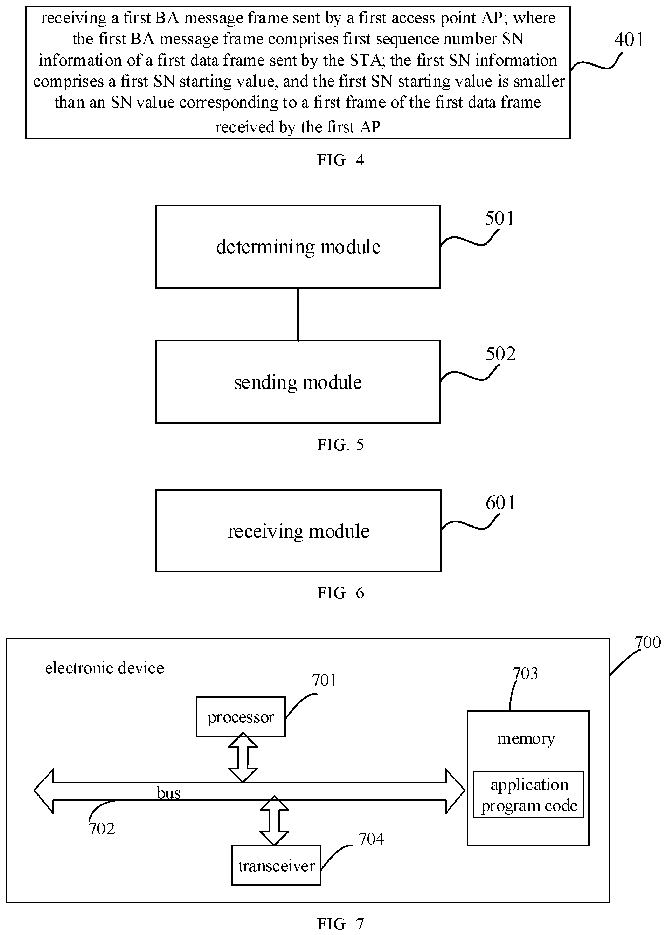

As shown in FIG. 4, embodiments of the present invention provide a transmission method for a block acknowledgment BA message. Optionally, the method may be performed by a station STA and include a following step.

In step 401, a first BA message frame sent by a first access point AP is received, the first BA message frame includes first sequence number SN information of a first data frame sent by a station STA; the first SN information includes a first SN starting value, and the first SN starting value is smaller than an SN value corresponding to a first frame of the first data frame received by the first AP.

For the WLAN architecture to which the transmission method for the BA message according to embodiments of the present invention is applied, reference may be made to the first example mentioned above, which will not be elaborated here.

In the multi-link scenario, in order to establish a block acknowledgment mechanism (or BA agreement) between two MLDs, a BA initiator may send an add BA request frame to a BA receiver through an associated STA on an enabled link, and the add BA request frame indicates a TID for which the BA agreement is established. After receiving the add BA request frame, the BA receiver may respond to the add BA request frame through the affiliated STA on the enabled link, and the BA receiver may accept or reject the request. If the BA receiver accepts the request, a BA agreement (including setting and modification of BA parameters) is established between the BA initiator and the BA receiver for the TID specified in the add BA request frame.

After establishing the BA agreement, the BA initiator or the BA receiver may send a BA request frame to request the other party to feed back a BA message frame. In embodiments of the present invention, the first AP sends a BA message frame sent to the STA; the first BA message frame includes first SN information of a first data frame sent by the station STA; the first SN information includes a first SN starting value, the first SN starting value is configured to indicate a starting position of data frames sent by the STA, and the BA message frame is configured to feed back whether a data frame corresponding to the SN is correctly received. It should be noted that in embodiments of the present invention, the first data frame refers to a data frame sent by the STA, i.e., an uplink data frame, which may be a data frame sent by the STA to the first AP or other APs.

The first SN starting value is smaller than an SN value corresponding to a first frame of the first data frame received by the first AP; that is, the first frame of the first data frame received by the first AP is later than a first frame of the first data frame sent by the STA. For example, when a communication state between the STA and its associated AP changes, the STA may switch the communication to another AP, so that data transmission is uninterrupted. For example, in the scenario of switching from a second AP to the first AP, a first frame of the first data frame received by the second AP is the first frame of the first data frame sent by the STA, and its starting SN is N. After transmitting M frames of first data frames, the STA switches the communication from the second AP to the first AP, at this time, the first SN starting value of the first frame of the first data frame received by the first AP is N+M. Therefore, the first SN starting value (N) is smaller than the SN value (N+M) corresponding to the first frame of the first data frame received by the first AP.

In a case where the first AP determines that all the first data frames are correctly received, it feeds back the first BA message frame to the STA; for example, in a case where the first AP determines that all the first data frames are correctly received according to state information of first data frames received by other APs (such as the number of received data frames, the corresponding SN, etc., which may be sent by other APs or the STA to the first AP), the total number of the first data frames determined when the STA establishes the BA agreement (which may be sent by other APs or the STA to the first AP), and state information of the first data frames received by the first AP (such as the number of received data frames, the corresponding SN, etc.), the first AP feeds back the first BA message frame to the STA.

In this way, in order to meet the requirement of the UHR for transmission rate and the requirement of the low-latency service for latency, when the state of the communication between the STA and its associated AP changes, the STAmay switch the communication to another AP, so that data transmission is uninterrupted; and after the transmission of data frames is completed, the BA feedback may be implemented.

It may be understood that in embodiments of the present invention, if the first AP determines that not all the first data frames are received correctly, it will not feed back the first BA message frame to the STA. The STA may determine, according to the reception state of the first data frames fed back by all Aps, a first data frame that is not successfully received, and retransmit the data frame that is not successfully received, and then send the BA request frame.

In embodiments of the present invention, the STA receives the first BA message frame; the first BA message frame includes the first sequence number SN information of the first data frame sent by the station STA; the first SN information includes the first SN starting value, and the first SN starting value is smaller than the SN value corresponding to the first frame of the first data frame received by the first AP; and the first BA message frame is sent, to implement the BA mechanism, while meeting the requirements of UHR and the low-latency service.

Embodiments of the present invention provide a transmission method for a BA message. Optionally, the method may be performed by a station STA, and includes:
sending a first BA request frame to a first AP ; where the first BA request frame includes first SN information; and
receiving a first BA message frame sent by the first AP; where the first BA message frame includes the first SN information of a first data frame sent by the STA; the first SN information includes a first SN starting value, and the first SN starting value is smaller than an SN value corresponding to a first frame of the first data frame received by the first AP.

After the BA agreement is established, the STA sends the first BA request frame to request the first AP to feed back the first BA message frame; after receiving the first BA request frame sent by the STA, the first AP feeds back the first BA message frame to the STA; the first BA message frame includes the first SN information of the first data frame sent by the STA; the first SN information includes the first SN starting value, and the first SN starting value is configured to indicate a starting position of the data frame sent by the STA.

Optionally, in embodiments of the present invention, the first BA request frame further includes: a MAC address of the STA or an MLD MAC address of a Non-AP MLD to which the STA is affiliated.

Optionally, in embodiments of the present invention, the first BArequest frame includes a second SN end value. The second SN end value is an SN of a last frame of the first data frame sent by the STA to the second AP. The STA sends the second SN end value to the first AP, so that the first AP may feed back the first BA message frame to the STA in a case where the first AP determines, according to the first SN starting value, the total number of the first data frames and the second SN end value, that all the first data frames are received correctly.

Embodiments of the present invention provide a transmission method for a BA message. Optionally, the method may be performed by a station STA, and includes:
determining a second BA message frame; where the second BA message frame includes second SN information of a second data frame received by the STA; the second SN information includes a second SN starting value, and the second SN starting value is smaller than an SN value corresponding to a first frame of the second data frame sent by the first AP; and
sending the second BA message frame.

The STA determines the second BA message frame, and the second BA message frame is configured to feed back whether the data frames sent by all the APs to the STA during this communication process are correctly received. The second BA message frame includes the second SN information of the second data frame received by the STA. The second data frames, i.e., downlink data frames, may be sent to the STA by the first AP and other APs in collaboration. For example, in a scenario of switching from the second AP to the first AP, a first frame of second data frame sent by the second AP is a first frame of second data frame received by the STA, and its starting SN is N. After transmitting M frames of first data frames, the STA switches the communication from the second AP to the first AP. At this time, the second SN starting value of a first frame of second data frame sent by the first AP is N+M. Therefore, the second SN starting value (N) is smaller than the SN value (N+M) corresponding to the first frame of second data frame sent by the first AP.

It should be noted that, in embodiments of the present invention, the second data frame refers to a data frame received by the STA, i.e., a downlink data frame, which may be a data frame sent by the first AP or other APs to the STA.

Embodiments of the present invention provide a transmission method for a BA message. Optionally, the method may be performed by a station STA, and includes:
receiving a second BA request frame sent by the first AP, where the second BA request frame includes a third SN end value of a last frame of the second data frame sent by the first AP to the STA;
determining a second BA message frame; where the second BA message frame includes second SN information of a second data frame received by the STA; the second SN information includes a second SN starting value, and the second SN starting value is smaller than an SN value corresponding to a first frame of the second data frame sent by the first AP; and
sending the second BA message frame.

After the BA agreement between the STA and the first AP is established, the first AP sends the second BA request frame to request the STA to feed back the second BA message frame; and the STA determines the second BA message frame, and the second BA message frame is configured to feed back whether the data frames sent by all the APs to the STA during this communication process are correctly received.

Embodiments of the present invention provide a transmission method for a BA message. Optionally, the method may be performed by a station STA, and includes:
determining a second BA message frame; where the second BA message frame includes second SN information of a second data frame received by the STA; the second SN information includes a second SN starting value, and the second SN starting value is smaller than an SN value corresponding to a first frame of the second data frame sent by the first AP; and
determining, according to the third SN end value and second BA establishment information, that reception of the second data frames is completed, and sending the second BA message frame to the first AP.

In a case where the STA determines, according to the third SN end value and the second BA establishment information, that all the second data frames are received correctly, the second BA message frame may be fed back to the STA. For example, in an example where there is one second AP, the second SN starting value is 0, the SN of a last frame of the second data frame received by the STA from the second AP is M, the SN value corresponding to the first frame of the first data frame sent by the first AP is (M+1), the third SN end value is (N-1), the total number of the first data frames is N, then it is determined that all the second data frames are correctly received.

Embodiments of the present invention provide a transmission method for a BA message. Optionally, the method may be performed by a station STA and include: establishing a BA agreement with an AP, and determining BA establishment information of the BA agreement; the BA establishment information includes: an SN starting value of the first data frame sent by the STA and a total number of the first data frames; or the BA establishment information includes: an SN starting value of the second data frame received by the first AP and a total number of the second data frames.

The AP establishes a BA mechanism with the STA and negotiates BA establishment information with the STA; the BA establishment information includes: the SN starting value for data frame transmission with the STA and the total number of data frames transmitted continuously.

In a case where the data frame is an uplink data frame, the data frame includes the first data frame; the first AP sends the second BA establishment information to the second AP, so that the second AP may feed back the BA message frame to the STA in a case where the second AP determines, according to the first SN starting value and the total number of the first data frames, that all the first data frames are correctly transmitted.

In a case where the data frame is a downlink data, the data frame includes the second data frame; the first AP sends the second BA establishment information to the second AP, so that the second AP may request the BA message frame from the STA in a case where the second AP determines, according to the second SN starting value and the total number of the second data frames, that all the second data frames are correctly transmitted.

In embodiments of the present invention, the STA receives the first BA message frame; the first BA message frame includes the first SN information of the first data frame sent by the STA; the first SN information includes the first SN starting value, and the first SN starting value is smaller than the SN value corresponding to the first frame of the first data frame received by the first AP; and the first BA message frame is sent, to implement the BA mechanism, while meeting the requirements of UHR and the low-latency service.

Referring to FIG. 5, based on the same principle as the method according to the embodiments of the present invention, embodiments of the present invention further provide an electronic device, the electronic device is a first access point AP and includes: a determining module 501 and a sending module 502.

The determining module 501 is configured to determine a first BA message frame; the first BA message frame includes first sequence number SN information of a first data frame sent by a station STA; the first SN information includes a first SN starting value, and the first SN starting value is smaller than an SN value corresponding to a first frame of the first data frame received by the first AP.

The sending module 502 is configured to send the first BA message frame.

Optionally, in embodiments of the present invention, the electronic device includes a first receiving module configured to receive a first BA request frame sent by the STA; and the first BA request frame includes the first SN information.

Optionally, in embodiments of the present invention, the electronic device includes a second receiving module configured to receive first BA establishment information sent by a second AP; the first BA establishment information includes: the first SN starting value and a total number of the first data frames determined when the second AP establishes a BA agreement with the STA.

Optionally, in embodiments of the present invention, the sending module 502 is configured to: determine, according to a second SN end value, the first BA establishment information, and a first SN end value of a last frame of the first data frame received by the first AP, that reception of the first data frames is completed, and send the first BA message frame to the STA.

The second SN end value is an SN of a last frame of the first data frame sent by the STA to the second AP.

Optionally, in embodiments of the present invention, the second SN end value is sent by the second AP or is included in the first BA request frame.

Optionally, in embodiments of the present invention, the first BA request frame further includes: a MAC address of the STA or an MLD MAC address of a Non-AP MLD to which the STA is affiliated.

Optionally, in embodiments of the present invention, the electronic device further includes a third receiving module configured to receive a second BA message frame sent by the STA; the second BA message frame includes second SN information of a second data frame received by the STA; the second SN information includes a second SN starting value, and the second SN starting value is smaller than an SN value corresponding to a first frame of the second data frame sent by the first AP.

Optionally, in embodiments of the present invention, the electronic device further includes a request sending module configured to send a second BA request frame to the STA, and the second BA request frame includes a third SN end value of a last frame of the second data frame sent by the first AP to the STA.

Optionally, in embodiments of the present invention, the electronic device further includes a first establishing module configured to establish a BA agreement with the STA and determine BA establishment information of the BA agreement established; the BA establishment information includes: an SN starting value for data frame transmission with the STA and a total number of data frames transmitted continuously; and the data frame includes the first data frame or the second data frame.

Optionally, in embodiments of the present invention, the electronic device further includes an information sending module configured to send the BA establishment information to the second AP.

Embodiments of the present invention further provide a transmission apparatus for a block acknowledgment BA message, which is applicable to a first access point AP and includes a message frame determining module and a message frame sending module.

The message frame determining module is configured to determine a first BA message frame; the first BA message frame includes first sequence number SN information of a first data frame sent by a station STA; the first SN information includes a first SN starting value, and the first SN starting value is smaller than an SN value corresponding to a first frame of the first data frame received by the first AP.

The message frame sending module is configured to send the first BA message frame.

The apparatus also includes other modules of the electronic device in the aforementioned embodiments, which will not be elaborated here.

Referring to FIG. 6, based on the same principle as the method according to the embodiments of the present invention, embodiments of the present invention further provide an electronic device, the electronic device is a station STA and includes a receiving module 601.

The receiving module 601 is configured to receive a first BA message frame sent by a first access point AP; the first BA message frame includes first sequence number SN information of a first data frame sent by the STA; the first SN information includes a first SN starting value, and the first SN starting value is smaller than an SN value corresponding to a first frame of the first data frame received by the first AP.

Optionally, in embodiments of the present invention, the electronic device includes a first sending module configured to send a first BArequest frame to the first AP; and the first BA request frame includes the first SN information.

Optionally, in embodiments of the present invention, the first BA request frame further includes: a MAC address of the STA or an MLD MAC address of a Non-AP MLD to which the STA is affiliated.

Optionally, in embodiments of the present invention, the first BA request frame includes a second SN end value.

Optionally, in embodiments of the present invention, the electronic device further includes a BA message frame processing module configured to: determine a second BA message frame; where the second BA message frame includes second SN information of a second data frame received by the STA; the second SN information includes a second SN starting value, and the second SN starting value is smaller than an SN value corresponding to a first frame of the second data frame sent by the first AP; and send the second BA message frame.

Optionally, in embodiments of the present invention, the electronic device includes a request receiving module configured to receive a second BA request frame sent by the first AP, and the second BA request frame includes a third SN end value of a last frame of the second data frame sent by the first AP to the STA.

Optionally, in embodiments of the present invention, the BA message processing module is configured to: determine, according to the third SN end value and second BA establishment information, that reception of the second data frames is completed, and send the second BA message frame to the first AP.

Optionally, in embodiments of the present invention, the electronic device includes a second establishing module configured to: establish a BA agreement with an AP, and determine BA establishment information of the BA agreement; the BA establishment information includes: an SN starting value of the first data frame sent by the STA and a total number of the first data frames; or the BA establishment information includes: an SN starting value of the second data frame received by the first AP and a total number of the second data frames.

Embodiments of the present invention further provide a transmission apparatus for a block acknowledgment BA message, which is applicable to a first access point AP and includes a message frame receiving module configured to receive a first BA message frame sent by a first access point AP; the first BA message frame includes first sequence number SN information of a first data frame sent by the STA; the first SN information includes a first SN starting value, and the first SN starting value is smaller than an SN value corresponding to a first frame of the first data frame received by the first AP.

The apparatus also includes other modules of the electronic device in the aforementioned embodiments, which will not be elaborated here.

In an optional embodiment, the embodiment of the present invention further provides an electronic device, as shown in FIG. 7. The electronic device 700 shown in FIG. 7 may be a server, including a processor 701 and a memory 703. The processor 701 and the memory 703 are connected, for example, via a bus 702. Optionally, the electronic device 700 may further include a transceiver 704. It should be noted that in actual applications, the number of the transceivers 704 is not limited to one, and the structure of the electronic device 700 does not constitute a limitation on the embodiments of the present invention.

The processor 701 may be a central processing unit (CPU), a general-purpose processor, a digital signal processor (DSP), an application specific integrated circuit (ASIC), a field programmable gate array (FPGA), or other programmable logic devices, transistor logic devices, hardware components, or any combination thereof. The processor 701 may implement or execute various example logical blocks, modules, and circuits described in conjunction with the contents of the present invention. The processor 701 may also be a combination that implements computing functions, such as a combination of one or more microprocessors, a combination of a DSP and a microprocessor, etc.

The bus 702 may include a path to transmit information between the above components. The bus 702 may be a peripheral component interconnect (PCI) bus, an extended industry standard architecture (EISA) bus, or the like. The bus 702 can be divided into an address bus, a data bus, a control bus, etc. For ease of representation, FIG. 7 illustrates only one thick line to represent the bus 702, but this does not mean that there is only one bus or one type of bus.

The memory 703 may be a read only memory (ROM) or other types of static storage devices that may store static information and instructions, or a random access memory (RAM) or other types of dynamic storage devices that may store information and instructions; and the memory 703 may also be an electrically erasable programmable read only memory (EEPROM), a compact disc read only memory (CD-ROM), or other optical disk storage media or optical disc storage media (including a compressed optical disk, a laser disk, an optical disk, a digital versatile disk, a Blu-ray disk, etc.), a magnetic disk storage medium or other magnetic storage devices, or any other medium that may be used to carry or store the desired program codes in the form of instructions or data structures and may be accessed by a computer, but is not limited thereto.

The memory 703 is configured to store application program codes for executing the solution of the present invention, and the execution is controlled by the processor 701. The processor 701 is used to execute the application program codes stored in the memory 703 to implement the contents shown in the aforementioned method embodiments.

The electronic device includes, but is not limited to: a mobile terminal such as a mobile phone, a laptop, a digital broadcast receiver, a personal digital assistant (PDA), a tablet computer (PAD), a portable multimedia player (PMP), a vehicle-mounted terminal (such as a vehicle-mounted navigation terminal), etc.; and a fixed terminal such as a digital television (TV), a desktop computer, etc. The electronic device shown in FIG. 7 is merely an example and should not limit the functions and use scope of the embodiments of the disclosure in any way.

The server provided in the present invention may be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, content distribution network (CDN), as well as big data and artificial intelligence platforms. The terminal may be a smart phone, a tablet computer, a laptop computer, a desktop computer, a smart speaker, a smart watch, etc., but is not limited thereto. The terminal and the server may be connected directly or indirectly via wired or wireless communication, which is not limited in the present invention.

An embodiment of the present invention provides a computer-readable storage medium, on which a computer program is stored. When the computer program runs on a computer, the computer may execute the corresponding contents in the aforementioned method embodiments.

It should be understood that, although the steps in the flowcharts of the accompanying drawings are displayed sequentially as indicated by the arrows, these steps are not necessarily executed sequentially in an order indicated by the arrows. Unless otherwise specified herein, there is no strict order limitation for the execution of these steps, and these steps may be executed in other orders. Moreover, at least some of the steps in the flowcharts of the accompanying drawings may include a plurality of sub-steps or a plurality of stages. These sub-steps or stages are not necessarily executed at the same time, but may be executed at different times. The order of execution of these steps is not necessarily sequential, but these steps may be executed in turn or alternately with other steps or at least some of sub-steps or stages of other steps.

It should be noted that the above-mentioned computer-readable medium in the present invention may be a computer-readable signal medium, or a computer-readable storage medium, or any combination of the above two media. The computer-readable storage medium may be, for example, but is not limited to, an electronic, magnetic, optical, electromagnetic, infrared, or semiconducting system, apparatus, or device, or any combination of the foregoing. The more specific examples of the computer-readable storage medium may include, but are not limited to, an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present invention, the computer-readable storage medium may be any tangible medium that contains or stores a program for use by or in connection with an instruction execution system, apparatus, or device. In the present invention, the computer-readable signal medium may include a data signal propagated in a baseband or as a part of a carrier wave, in which computer-readable program codes are carried. Such a propagated data signal may take a variety of forms, including but not limited to electromagnetic signals, optical signals, or any suitable combination of the foregoing. The computer-readable signal medium may also be any computer-readable medium other than computer-readable storage media, which may send, propagate or transport a program for use by or in conjunction with an instruction execution system, apparatus or device. The program code embodied on the computer-readable medium may be transmitted using any appropriate medium, including but not limited to: a wire, an optical cable, a radio frequency (RF), or the like, or any suitable combination of the foregoing.

The above-mentioned computer-readable medium may be included in the above-mentioned electronic device, or may exist independently without being incorporated into the electronic device.

The above-mentioned computer-readable medium carries one or more programs. When the one or more programs are executed by the electronic device, the electronic device executes the method shown in the above embodiments.

According to one aspect of the present invention, a computer program product or a computer program is provided, including computer instructions stored in a computer-readable storage medium. A processor of a computer device reads the computer instructions from the computer-readable storage medium and executes the computer instructions, so that the computer device executes the method in the above various optional implementations.

The computer program codes for performing operations in the present invention may be written in one or more programming languages or their combination, including object-oriented programming languages such as Java, Smalltalk, C++, or conventional procedural programming languages such as "C" language or similar programming languages. The program codes may be executed entirely on a user computer, partly on the user computer, as a stand-alone software package, partly on the user computer and partly on a remote computer, or entirely on the remote computer or a server. In case of involving a remote computer, the remote computer may be connected to the user computer through any type of network, including a local area network (LAN) or a wide area network (WAN), or may be connected to an external computer (e.g., through the Internet using an Internet service provider).

The flowcharts and block diagrams in the accompanying drawings illustrate possibly implemented architectures, functions, and operations of systems, methods, and computer program products according to various embodiments of the present invention. In this regard, each block in the flowchart or block diagram may represent a module, a program segment, or a portion of code, which contains one or more executable instructions for implementing the specified logical functions. It should also be noted that, in some alternative implementations, the functions noted in the block may occur out of the order noted in the drawings. For example, two blocks shown in succession may actually be executed substantially in parallel, or they may sometimes be executed in the reverse order, depending on the functionality involved. It should also be noted that each block in the block diagram and/or flowchart, and a combination of blocks in the block diagram and/or flowchart, may be implemented by a dedicated hardware-based system that performs the specified functions or operations, or may be implemented by a combination of dedicated hardware and computer instructions.

The modules described and involved in the embodiments of the present invention may be implemented in software or hardware. The name of a module does not, in some cases, constitute a limitation on the module itself. For example, module A may also be described as "module A for performing operation B".

The above describes preferred embodiments of the present invention and the technical principles used. Those skilled in the art should understand that the scope of disclosure involved in the present invention is not limited to the technical solutions formed by a specific combination of the above-mentioned technical features, but should also cover other technical solutions formed by any combination of the above-mentioned technical features or their equivalent features without departing from the above-mentioned concepts of the present invention. For example, the above-mentioned features are replaced with the technical features with similar functions disclosed in the present invention (but not limited to this) to form a technical solution.

## Claims

1. A transmission method for a block acknowledgment BA message, performed by a first access point AP, comprising:
determining a first BA message frame; wherein the first BA message frame comprises first sequence number SN information of a first data frame sent by a station STA; the first SN information comprises a first SN starting value, and the first SN starting value is smaller than an SN value corresponding to a first frame of the first data frame received by the first AP; and
sending the first BA message frame.

2. The transmission method for the BA message according to claim 1, wherein before determining the first BA message frame, the method comprises:
receiving a first BA request frame sent by the STA; wherein the first BA request frame comprises the first SN information.

3. The transmission method for the BA message according to claim 2, comprising:
receiving first BA establishment information sent by a second AP; wherein the first BA establishment information comprises: the first SN starting value and a total number of the first data frames determined when the second AP establishes a BA agreement with the STA.

4. The transmission method for the BA message according to claim 3, wherein sending the first BA message frame comprises:
determining, according to a second SN end value, the first BA establishment information, and a first SN end value of a last frame of the first data frame received by the first AP, that reception of the first data frames is completed, and sending the first BA message frame to the STA;
wherein the second SN end value is an SN of a last frame of the first data frame sent by the STA to the second AP.

5. The transmission method for the BA message according to claim 4, wherein the second SN end value is sent by the second AP or is comprised in the first BA request frame.

6. The transmission method for the BA message according to any one of claims 2 to 5, wherein the first BA request frame further comprises: a media access control MAC address of the STA or a multi-link device MLD MAC address of a Non-AP MLD to which the STA is affiliated.

7. The transmission method for the BA message according to claim 3, further comprising:
receiving a second BA message frame sent by the STA; wherein the second BA message frame comprises second SN information of a second data frame received by the STA; the second SN information comprises a second SN starting value, and the second SN starting value is smaller than an SN value corresponding to a first frame of the second data frame sent by the first AP.

8. The transmission method for the BA message according to claim 7, wherein before receiving the second BA message frame sent by the STA, the method comprises:
sending a second BA request frame to the STA, wherein the second BA request frame comprises a third SN end value of a last frame of the second data frame sent by the first AP to the STA.

9. The transmission method for the BA message according to claim 7 or 8, further comprising:
establishing a BA agreement with the STA and determining BA establishment information of the BA agreement established; wherein the BA establishment information comprises: an SN starting value for data frame transmission with the STA, and a total number of data frames transmitted continuously; and the data frame comprises the first data frame or the second data frame.

10. The transmission method for the BA message according to claim 9, wherein after establishing the BA agreement with the STA, the method further comprises:
sending the BA establishment information to the second AP.

11. A transmission method for a block acknowledgment BA message, performed by a station STA, comprising:
receiving a first BA message frame sent by a first access point AP; wherein the first BA message frame comprises first sequence number SN information of a first data frame sent by the STA; the first SN information comprises a first SN starting value, and the first SN starting value is smaller than an SN value corresponding to a first frame of the first data frame received by the first AP.

12. The transmission method for the BA message according to claim 11, wherein before receiving the first BA message frame sent by the first AP, the method comprises:
sending a first BA request frame to the first AP; wherein the first BA request frame comprises the first SN information.

13. The transmission method for the BA message according to claim 11 or 12, wherein the first BA request frame further comprises: a media access control MAC address of the STA or a multi-link device MLD MAC address of a Non-AP MLD to which the STA is affiliated.

14. The transmission method for the BA message according to claim 11 or 12, wherein the first BA request frame comprises a second SN end value.

15. The transmission method for the BA message according to any one of claims 11 to 14, further comprising:
determining a second BA message frame; wherein the second BA message frame comprises second SN information of a second data frame received by the STA; the second SN information comprises a second SN starting value, and the second SN starting value is smaller than an SN value corresponding to a first frame of the second data frame sent by the first AP; and
sending the second BA message frame.

16. The transmission method for the BA message according to claim 15, wherein before determining the second BA message frame, the method comprises:
receiving a second BA request frame sent by the first AP, wherein the second BA request frame comprises a third SN end value of a last frame of the second data frame sent by the first AP to the STA.

17. The transmission method for the BA message according to claim 16, wherein sending the second BA message frame comprises:
determining, according to the third SN end value and second BA establishment information, that reception of the second data frames is completed, and sending the second BA message frame to the first AP.

18. The transmission method for the BA message according to any one of claims 15 to 17, further comprising:
establishing a BA agreement with an AP, and determining BA establishment information of the BA agreement;
wherein the BA establishment information comprises: an SN starting value of the first data frame sent by the STA and a total number of the first data frames; or
the BA establishment information comprises: an SN starting value of the second data frame received by the first AP and a total number of the second data frames.

19. An electronic device, as a first access point AP, comprising:
a determining module, configured to determine a first block acknowledgment BA message frame; wherein the first BA message frame comprises first sequence number SN information of a first data frame sent by a station STA; the first SN information comprises a first SN starting value, and the first SN starting value is smaller than an SN value corresponding to a first frame of the first data frame received by the first AP; and
a sending module, configured to send the first BA message frame.

20. An electronic device, as a station STA, comprising:
a receiving module, configured to receive a first block acknowledgment BA message frame sent by a first access point AP; wherein the first BA message frame comprises first sequence number SN information of a first data frame sent by the STA; the first SN information comprises a first SN starting value, and the first SN starting value is smaller than an SN value corresponding to a first frame of the first data frame received by the first AP.

21. An electronic device, comprising:
a memory,
a processor, and
computer programs stored in the memory and executable on the processor,
wherein when the processor executes the programs, the method according to any one of claims 1 to 10 or the method according to any one of claims **11** to 18 is implemented.

22. A computer-readable storage medium having stored therein computer programs that, when executed by a processor, cause the method according to any one of claims 1 to 10 or the method according to any one of claims **11** to 18 to be implemented.
